# EUROPÄISCHE PATENTSCHRIFT

(11) **EP 0 472 076 B1**
(45) Veröffentlichungstag und Bekanntmachung des Hinweises auf die Patenterteilung: **08.11.1995**
(21) Anmeldenummer: 91113466.6
(22) Anmeldetag: 12.08.1991
(51) Int. Cl.: C09D 101/18, C09D 7/12

(54) **Überzugsmittel sowie dessen Verwendung**
Coating composition and its use
Composition de revêtements et son utilisation

(30) Priorität: 24.08.1990 DE 4026701
(43) Veröffentlichungstag der Anmeldung: 26.02.1992
(73) Patentinhaber: Wolff Walsrode Aktiengesellschaft, D-29655 Walsrode (DE)
(72) Erfinder: Hoppe, Lutz, Dr., W-3030 Walsrode (DE); Kressdorf, Burkhard, Dr., W-3030 Walsrode (DE); Lühmann, Erhard, Dipl.-Ing., W-3036 Bomlitz 1 (DE); Näder, Reinhard, Dr., W-3030 Walsrode (DE)
(74) Vertreter: Braun, Rolf, Dr.

(56) Entgegenhaltungen:
- US-A- 4 517 324
- US-A- 4 681 784
- US-A- 4 731 121
- DATABASE WPIL, Nr. 83-709 536 DERWENT PUBLICATIONS LTD., London, GB & SU-A-954 408

## Beschreibung

Gegenstand der vorliegenden Erfindung ist die Verwendung von alkylphthalatfreien Cellulosenitrat-Weichmachergemischen als Lackrohstoff.

Bei der Lackierung von flexiblen Substraten (z.B. Folien aller Art) wird zur Steigerung der Produktionsleitung u.a. die Trocknungstemperatur erhöht. Jedoch steht dieser Temperatursteigerung das thermoplastische Verhalten der Überzugsmaterialien entgegen. Daher besteht der Wunsch nach solchen Überzugsmitteln, die eine Erhöhung der Trocknungstemperatur erlauben, ohne daß es bei der Applikatikon zu Problemen, z.B. hinsichtlich der Blockfestigkeit, kommt.

So ist z.B. bekannt, daß zur Herstellung von siegelfähigen, bedruckten Aluminiumfolien für den Bereich von Lebensmittel- und Pharmaverpackungen Überdrucklacke auf der Basis von OH-haltigen Polyestern bzw. Acrylaten, Isocyanaten und Cellulosenitrat verwendet werden. Bei diesem Herstellungsprozeß treten Probleme aufgrund mangelnder Blockfestigkeit der Überzugsmittel auf.

Durch den Einbau von Cellulosenitraten werden allgemein die Haftfestigkeit, die Tiefziehfähigkeit und die Verarbeitungseigerschaften wesentlich verbessert.

Aufgrund gesetzlicher Vorschriften muß bei handelsüblichen Lack-Cellulosenitraten ein Phlegmatisierungsmittel (z.B. Anfeuchtungsmittel) zugesetzt werden.

Als Anfeuchtungsmittel werden allgemein Alkohole, wie z.B. Ethanol, Isopropanol oder Butanol, verwendet. Diese Anfeuchtungsmittel führen zu erheblichen Problemen bei der Verarbeitung solcher Lacke, denn die Alkohole stören in den üblichen Adsorptionsanlagen, die zur Imissionsverringerung den Lackieranlagen nachgeschaltet sind. Außerdem können die Alkohole beim Einsatz in PUR-Lacken mit dem Isocyanat zu niedermolekularen Verbindungen reagieren und damit das Eigenschaftsprofil herabsetzen.

Statt dieser Lösungsmittel können aber auch Weichmacher, wie in der DE-PS 1 203 652, DE-OS 1 470 860 und 1 570 121 beschrieben, als Phlegmatisierungsmittel für das Cellulosenitrat verwendet werden. Die Weichmacher werden auf das wasserfeuchte Cellulosenitrat aufgebracht und dann bevorzugt bei höheren Temperaturen (> 50°C) mechanisch eingearbeitet. Nachfolgend wird das Wasser abgepreßt und die Masse getrocknet (DE-PS 1 203 652). Eine andere Methode ist das Auftragen von Weichmachern in Lösungsmitteln (DE-OS 147 860 und 1 570 121).

Eingesetzt wurden nach diesen Veröffentlichungen ausschließlich Phthalate, wie z.B. Dibutylphthalat oder Dioctylphthalat, in einer Menge von mindestens 18 Gew.-%. Durch die Verwendung solcher Art phlegmatisierter Cellulosenitrate ist es zwar möglich, die Lösungsmittel in der Lackformulierung gezielt auszuwählen, aber die Beschichtung enthält Weichmacher, die das spezielle, notwendige Eigenschaftsprofil von z.B. beschichteten Aluminiumfolien herabsetzen. So wird bei der Herstellung von bedruckten Aluminiumfolien für den Lebensmittel- oder Pharmabereich nach dem Auftragen eines Primers und der Druckfarbe der Cellulosenitrat-enthaltende Reaktivüberdrucklack aufgetragen, bei ca 200°C getrocknet und dann auf der unbeschichteten Folienseite mit einem Siegellack versehen. Zur Verbesserung des Verlaufes und einer Beschleunigung der Durchtrocknung wird dabei die bedruckte Alumiumfolienseite über beheizte Walzen geführt, die eine Oberflächentemperatur von bis zu 240°C aufweisen können. Bei dieser Herstellungsmethode treten Probleme dadurch auf, daß der Überlackdruck, der auf der heißen Walzenoberfläche aufliegt, zu Verblockungen, Verklebungen und Vergilbungen neigt.

Aufgabe der vorliegenden Erfindung war es, ein wasserfreies Cellulosenitrat-Weichmachergemisch zur Verfügung zu stellen, das gegenüber den bekannten Cellulosenitrat-Weichmacher-Gemischen eine verbesserte Blockfestigkeit aufweist.

Es wurde überraschend gefunden, daß das Problem durch die Bereitstellung von alkylphthalatfreien und wasserfreien WeichmacherCellulosenitrat-Gemischen, bei denen der Weichmacher chemisch durch Epoxydierung und/oder Ethoxylierung modifiziert ist, gelöst werden kann.

Gegenstand der Erfindung ist die Verwendung von alkylphthalatfreien Cellulosenitrat-Weichmachergemischen, bestehend aus Cellulosenitrat mit einem N₂-Gehalt von weniger als 12,6 % (Gew.-%) und epoxydierten und/oder ethoxylierten Estern natürlicher Fettsäuren und/oder epoxydierten und/oder ethoxylierten Triglyceriden als Lackrohstoff.

Zur Erzeugung der erfindungsgemäß verwendeten CelllulosenitratWeichmacher-Gemische werden bevorzugt handelsübliche Cellulosenitrate unterschiedlicher Viskositätsstufen mit einem Stickstoffgehalt von 10 - 12,6 Gew.-% eingesetzt.

Bevorzugte Überzugsmittel sind solche, die aus 82-40 Gew.-%, vorzugsweise 82-60 Gew.-% Cellulosenitrat und 18-60 Gew.-%, vorzugsweise 18-40 Gew.-% epoxydierten und/oder ethoxylierten Ester natürlicher Fettsäuren und/oder epoxydierte und/oder ethoxylierter Triglyceride bestehen.

Bei den epoxydierten Weichmachern handelt es sich insbesondere um epoxydierte Ester natürlicher Fettsäuren und epoxydierte Triglyceride. Bevorzugt sind die hochmolekularen Epoxyd-Weichmacher aus epoxydierten Triglyceriden. Besonders bevorzugt sind die Epoxyd-Weichmacher aus natürlichen Trifettsäureglyceriden, die eine nennenswerte Zahl ungesättigter Doppelbindungen (Jod-Zahl 120-200) enthalten, z.B. epoxydiertes Sojabohnen- oder Leinöl mit einem Molekulargewicht von ca. 900 und einem Oxirangehalt > 6%.

Bei den epoxydierten Weichmachern handelt es sich insbesondere um epoxydierte Ester natürlicher Fettsäuren. Bevorzugt sind die hochmolekularen Epoxidweichmacher aus epoxydierten Triglyceriden. Besonders bevorzugt sind die Epoxid-Weichmacher aus natürlichen Trifettsäureglyceriden, die eine nennenswerte Zahl ungesättigter Doppelbindungen (Jod-Zahl > 120) enthalten.

Folgende Ester sind z.B. geeignet:
Di-iso-decyl-tetrahydro-epoxiphthalat, Di-2-ethyl-hexyl-tetrahydro-epoxiphthalat, Alkyl-epoxi-stearate, z.B. Octyl-epoxi-stearat, Cycloalkyl-epoxi-stearate, z.B. Cyclohexyl-epoxi-stearat, Alkyl-epoxi-oleate, wie z.B. Butyl- und Octyl-epoxi-oleat, Cycloalkyl-epoxi-oleate, wie z.B. Cyclohexyl-epoxi-stearat, epoxidierte Polyglykol-Fettsäureester, Alkyl-epoxi-rici-noleate, Alkylester von epoxidierten Baumwollsaat- und Sojafettsäuren, epoxidiertes Baumwollsaatöl, epoxidiertes Sonnenblumenöl, epoxidiertes Rizinußöl, epoxidiertes Palmöl, epoxidiertes Sojabohnenöl, epoxidiertes Leinöl, epoxidiertes Holzöl, epoxidiertes Tallöl, epoxidiertes Saffloröl, epoxydiertes Sesamöl. Besonders bevorzugt ist epoxidiertes Sojabohnenöl mit einem Oxirangehalt > 6%.

Bei den ethoxylierten Weichmachern handelt es sich um ethoxylierte Ester natürlicher Fettsäuren und deren Hydrierungsprodukte, insbesondere um ethoxylierte Triglyceride. Bevorzugt sind die hochmolekularen, ethoxylierten Triglyceride. Besonders bevorzugt sind Ethoxylierungsprodukte aus natürlichen Trifettsäureglyceriden, die eine nennenswerte Zahl ungesättigter Doppelbindungen (Jod-Zahl 60-200) enthalten, z.B. Rizinusöl mit 2-20 Mol Ethylenoxid/Mol, insbesondere 2-8 Mol Ethylenoxid/Mol.

Zusätzlich zu den erfindungsgemäß einzusetzenden Weichmachern bzw. Weichmachergemischen können auch andere Phlegmatisierungsmittel in geringem Umfang eingesetzt werden, um z.B. die Kältefestigkeit von Beschichtungen zu verbessern.

In einer bevorzugten Ausführungsform enthalten die erfindungsgemäß eingesetztem Gemische, bezogen auf das Gesamtgewicht, wenigstens 18 Gew.-%, insbesondere 18-40 Gew.-%, des epoxydierten bzw. ethoxylierten Weichmachers. Wenn zum Weichmacher andere Komponenten zugesetzt werden, werden diese vorzugsweise in einer Menge von 0-5 Gew.-%, bezogen auf das gesamte Gemisch, eingesetzt. Im Falle einer derartigen Abmischung von Phlegmatisierungsmitteln beträgt der gesamte Gehalt an Phlegmatisierungsmittel vorzugsweise 18-45 Gew.-%.

Die Einarbeitung des Weichmachers bzw. Mischungen aus dem Weichmacher und zusätzlichem Phlegmatisierungsmittel erfolgt nach den üblichen Verfahren zur Herstellung von Weichmacher-Cellulosenitrat-Gemischen. Als Beispiel sei hier das Aufdüsen, gegebenenfalls als Emulsion vorliegend, auf das wasserfeuchte Cellulosenitrat in einer kontinuierlich arbeitenden Schubzentrifuge oder in einen konventionellen Knetaggregat bzw. Rühraggregat genannt.

Die Verwendung solcher Weichmacher-Cellulosenitrat-Gemische als Lackrohstoff zur Lackierung von starren und flexiblen Substraten wird bevorzugt zur Herstellung von Lacken für die Lackierung von flexiblen Substraten, die eine hohe Blockfestigkeit besitzen müssen, insbesondere mit Polyurethanlacken, eingesetzt.

Als flexible Substrate werden flächige Gebilde, wie z.B. Aluminium-, Zellglas-, Polyamid-, Polyester-, Polypropylen-, Polyurethan- und Polycarbonatfolien oder Harz-getränkte Papiere verstanden. Je nach Applikationsart und Anforderungsprofil ist es möglich, die Überzugsmittel mit anderen Lackrohstoffen zu Lacken zu formulieren.

Der Gegenstand der Erfindung soll anhand der folgenden Beispiele noch näher erläutert werden.

### Beispiele

Auf das Cellulosenitrat vom Normtyp E 24 (angefeuchtet mit 35 % Wasser) werden 18 Gew.-% folgender Weichmacher nach der in der DE 1 203 652 beschriebenen Methode aufgebracht:
Dioctylphthalat (Vergleichsbeispiel),
epoxydiertes Sojabohnenöl,
epoxydiertes Leinöl,
ethoxyliertes Rizinusöl mit durchschnittlich 4 Mol Ethoxylenoxid/Mol.

Mit diesen Cellulosenitrat-Weichmacher-Gemischen wurde die Verblockungsneigung von reinen Cellulosenitrat-Weichmacher-Filmen sowie von Cellulosenitrat-enthaltenden PUR-Filmen bestimmt. Zur thermischen Belastung der Lackoberfläche wurde ein Reib-Echtheits-Tester FEK-VESLIC der Kueny-Maschinenbau, Münchenstein, Schweiz, mit einem Thermostempel eingesetzt. In dieses Gerät wurde eine Glasplatte mit dem zu untersuchenden Film, auf den ein Papiervlies aufgelegt, welches an der Unterseite der Glasplatte befestigt wurde, fest eingespannt. Auf dieses Vlies wurde dann ein 500 g schwerer, heizbarer Stempel aus V4A-Stahl mit einer Grundfläche von 15x15 mm und abgerundeten Kanten mit einem Kantenradius von 1 mm, der auf die gewünschte Prüftemperatur aufgeheizt war, aufgesetzt. Der Stempel wurde mit einem zusätzlichen Gewicht von 500 g versehen und dann in Hin- und Herbewegung gesetzt. Dabei wurde der Stempel auf einem Reibweg von 40 mm mit einer Frequenz von 40 ± 2 Cyclen/min 200 Mal über das Papier geführt. Nach dieser thermischen und mechanischen Belastung wurde die Lackoberfläche mit Noten zwischen 1 und 6 beurteilt:
1: keine sichtbaren Veränderungen der Lackoberfläche,
2: Fläche sichtbar verändert ohne Fasern,
3: Fläche sichtbar verändert mit einzelnen Fasern,
4: Fläche zu einem Drittel mit Fasern belegt,
5: Fläche zu zwei Dritteln mit Fasern belegt,
6: Fläche völlig mit Fasern belegt.

### Beispiel 1

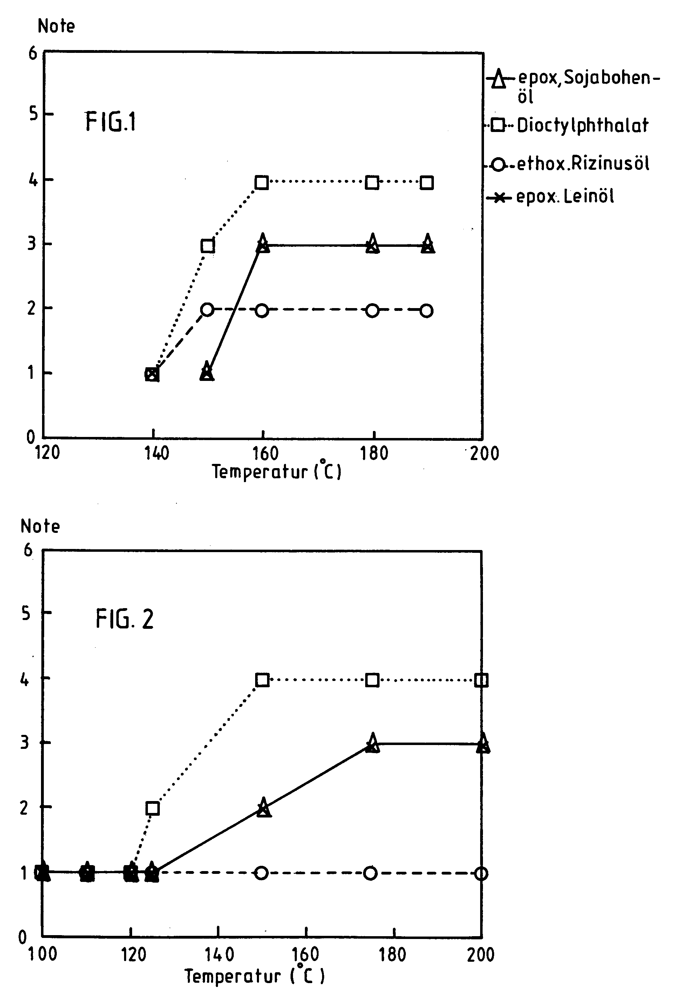

Die Cellulosenitrat-Weichmacher-Geinische wurden 20 %ig in Ethylacetat gelöst. Diese Lösung wurde auf Glasplatten mit einem 30 µm Kastenrakel aufgetragen. Die Lackoberflächen wurden 2 h bei Raumtemperatur und 30 min bei 50°C getrocknet und dann im oben beschriebenen Gerät getestet. Dabei wurden Temperaturen zwischen 140 und 200°C variiert. Die Ergebnisse sind in der Abbildung 1 dargestellt.

### Dioctylphthalat:

Ab 140°C nimmt die Verblockungsneigung der Lackoberfläche stark zu bis bei 160°C ein Maximum mit einer Belegung von einem Drittel der Oberfläche mit Fasern erreicht ist.

### Epoxydiertes Sojabohnenöl:

Eine Veränderung der Oberfläche stellt sich erst ab 160°C ein, d.h. 20°C später als beim Einsatz von Dioctylphthalat. Dies ist ein bedeutender, verarbeitungstechnischer Vorteil. Auch bei Temperaturen oberhalb 160°C ist die Verklebeneigung dieser Oberfläche geringer als beim Einsatz von Dioctylphthalat.

### Epoxydiertes Leinöl:

Die Meßwerte sind mit denen von epoxydiertem Sojabohnenöl identisch.

### Ethoxyliertes Rizinusöl:

Die Verklebungsneigung dieser Oberflächen ist außerordentlich gering; es hatten nach der thermischen Belastung auch bei 190°C keine Fasern an der Lackoberfläche.

### Beispiel 2

Es wurde in PUR-Lack folgender Zusammensetzung hergestellt:
5 Gew.-T. Weichmacher-Cellulosenitrat-Gemisch,
15 Gew.-T. Desmophen 1300, (Polyesterpolyol der Bayer AG, Leverkusen),
67 Gew.-T. Ethylacetat,
13 Gew.-T. Desmodur L (aliphatisches Polyisocyanat der Bayer AG, Leverkusen).

Dieser Lack wurde mit einem 30 µm Kastenrakel auf Glasplatten aufgezogen, 2 h bei Raumtemperatur abgedunstet und 10 min bei 180°C gehättet und nach dem oben beschriebenen Verfahren bei Temperaturen zwischen 100 und 200°C getestet. Die Ergebnisse sind in der Abbildung 2 dargestellt:

### Dioctylphthalat (Vergleichsversuch):

Ab 120°C beginnt ein Verkleben der Oberfläche. Ab 160° ist der Maximalwert erreicht, bei dem eine große Anzahl von Fasern auf der Oberfläche kleben bleibt. Der Lack vergilbt außerordentlich stark.

### Epoxydiertes Sojabohnenöl:

Hier ist erst bei 150°C eine Verhärtung der Lackoberfläche zu erkennen. Bei 175°C wird das Maximum der Klebeneigung erreicht. Dies ist deutlich geringer als bei Dioctylphthalat; nur wenige Fasern bleiben an der Oberfläche kleben. Eine Vergilbung findet hier nicht statt.

### Epoxydiertes Leinöl:

Die Meßwerte sind mit denen von epoxydiertem Sojabolmenöl identisch. Eine Vergilbung findet hier nicht statt

### Ethoxyliertes Rizinusöl:

Bei Einsatz dieses Weichmacher-Cellniosenitrat-Gemisches findet bis zu 200°C keinerlei Veränderung der Lackoberfläche statt.

## Patentansprüche

1. Verwendung von alkylphthalatfreien Cellulosenitrat-Weichmachergemischen, bestehend aus Cellulosenitrat mit einem N₂-Gehalt von weniger als 12,6 % (Gew.-) und epoxyiderten und/oder ethoxylierten Estern natürlicher Fettsäuren und/oder epoxydierten und/oder ethoxylierten Triglyceriden als Lackrohstoff.

2. Verwendung gemäß Anspruch 1, dadurch gekennzeichnet, daß das Gemisch aus 82 - 40 Gew.-% Cellulosenitrat und 18 - 60 Gew.-% epoxydierten und/oder ethoxylierten Ester natürlicher Fettsäuren und/oder epoxydierte und/oder ethoxylierter Triglyceride besteht.

3. Verwendung gemäß einem der Ansprüche 1 oder 2, dadurch gekennzeichnet, daß das Gemisch epoxydiertes Leinöl enthält.

## Claims

1. The use of alkyl-phthalate-free cellulose nitrate plasticizer mixtures consisting of cellulose nitrate having a nitrogen content of less than 12.6% (by weight) and epoxidized and/or ethoxylated esters of natural fatty acids and/or epoxidized and/or ethoxylated triglycerides as a raw material for lacquers.

2. The use claimed in claim 1, characterized in that the mixture consists of 82 to 40% by weight of cellulose nitrate and 18 to 60% by weight of epoxidized and/or ethoxylated esters of natural fatty acids and/or epoxidized and/or ethoxylated triglycerides.

3. The use claimed in claim 1 or 2, characterized in that the mixture contains epoxidized linseed oil.

## Revendications

1. Utilisation de mélanges plastifiants à base de nitrate de cellulose sans phtalates d'alkyle, constitués de nitrate de cellulose ayant une teneur en N₂ de moins de 12,6 % (en poids) et d'esters époxydés et/ou éthoxylés d'acides gras naturels et/ou de triglycérides époxydés et/ou éthoxylés comme matière première pour peinture.

2. Utilisation suivant la revendication 1, caractérisée en ce que le mélange est constitué de 82 à 40 % en poids de nitrate de cellulose et de 18 à 60 % en poids d'esters époxydés et/ou éthoxylés d'acides gras naturels et/ou de triglycérides époxydés et/ou éthoxylés.

3. Utilisation suivant l'une des revendications 1 et 2, caractérisée en ce que le mélange contient de l'huile de lin époxydée.
